# EUROPÄISCHE PATENTSCHRIFT

(11) **EP 2 666 231 B1**
(45) Veröffentlichungstag und Bekanntmachung des Hinweises auf die Patenterteilung: **09.12.2015**
(21) Anmeldenummer: 12700815.9
(22) Anmeldetag: 19.01.2012
(51) Int. Cl.: H02K 9/19, H02K 9/20, H02K 11/00

(54) **KÜHLVERFAHREN FÜR ELEKTRISCHE SCHIENENFAHRZEUGKOMPONENTEN**
COOLING METHOD FOR ELECTRIC RAILWAY VEHICLE COMPONENTS
PROCÉDÉ DE REFROIDISSEMENT POUR COMPOSANTS DE VÉHICULE FERROVIAIRE ÉLECTRIQUE

(30) Priorität: 08.03.2011 DE 102011005253
(43) Veröffentlichungstag der Anmeldung: 27.11.2013
(73) Patentinhaber: Siemens Aktiengesellschaft, 80333 München (DE)
(72) Erfinder: SEIT, Jörg, Christian, A-8020 Graz (AT); LÖWENSTEIN, Lars, 90768 Fürth Vach (DE)
(86) Internationale Anmeldenummer: PCT/EP2012/050749
(87) Internationale Veröffentlichungsnummer: WO 2012/119804

(56) Entgegenhaltungen:
- DE-A1- 4 207 857
- DE-A1- 19 630 431
- JP-A- 7 298 401
- JP-A- 2001 211 608
- US-A- 4 198 191
- US-A1- 2002 130 565
- US-A1- 2006 174 642
- US-B1- 7 679 234

## Beschreibung

Die Erfindung betrifft eine Kühlanordnung für eine elektrische Schienenfahrzeugkomponente nach dem Oberbegriff von Anspruch 1 und ein Schienenfahrzeug, bei dem zu Kühlzwecken von elektrischen Schienenfahrzeugkomponenten eine solche Anordnung vorgesehen ist.

Eine solche Kühlanordnung ist aus der JP 7298401 A bekannt. Zum weiteren Stand der Technik gehören die US 7679234 B1, die ein Sprühsystem zum Kühlen eines elektrischen Motors zum Gegenstand hat, die JP 2001211608A, die sich mit dem Kühlen eines elektrischen Generators beschäftigt, die US 2002/130565A1, in der ebenfalls eine Sprühkühlung eines Motors beschrieben ist, und die US 4198191A, die eine elektrische Fluidpumpe zum Gegenstand hat, die mittels Verdampfung gekühlt ist.

Die Antriebskomponenten von elektrisch angetriebenen Schienenfahrzeugen, insbesondere die Fahrmotoren, Leistungshalbleiter und Transformatoren erzeugen im Betrieb Wärme, welche abgeführt werden muss um die thermischen Betriebsgrenzen dieser Bauteile nicht zu überschreiten. Es ist üblich, die Fahrmotoren mit einer Kühlung auszustatten, welche Wasser oder Luft als Kühlmedium einsetzt. Wasserkühlungen bedürfen eines höheren Aufwands, bieten aber den Vorteil, den Motor hermetisch geschlossen konstruieren zu können, sodass kein Schmutz in den Motor eindringen kann. Leistungshalbleiter bedürfen ebenso einer Kühlung, wobei die wesentlich geringeren thermischen Zeitkonstanten der Halbleiter zu berücksichtigen sind. Während Motoren aufgrund ihrer großen metallischen Masse lange Zeitkonstanten aufweisen, die auch eine länger andauernde Überlastung des Motors ermöglichen weisen Halbleiter typischerweise Zeitkonstanten im Sekundenbereich auf und eine damit entsprechend niedrigere Überlastbarkeit. Die Auslegung der Komponenten und ihrer zugehörigen Kühlung erfolgt unter Zugrundelegung einer bestimmten Spitzenlast. In Nahverkehrsfahrzeugen erfolgt der Betrieb des Antriebs allerdings meist in einem Aussetzbetrieb, bei welchem Zeiträume sehr hoher Belastung (beim Beschleunigen) mit Zeiträumen ohne Belastung (beim Halt in Bahnhöfen) in rascher Folge abwechseln. Die Kühlung insbesondere der Leistungshalbleiter ist aufgrund der niedrigen thermischen Zeitkonstanten der Halbleiter auf diese Maximallast auszulegen, was die Kühlungskomponenten aufwendig, teuer und schwer macht. Beispielsweise werden zu Kühlung der Halbleiter sogenannte Siedebadkühlungen eingesetzt, bei welcher der zu kühlende Halbleiter in ein isolierendes flüssiges Medium eingetaucht ist und dieses zur Verdampfung erwärmt, wobei das verdampfte Medium an einem Kondensator angekühlt wird, dabei an diesem Kondensator kondensiert und wieder in das Siedebad rückgeführt wird. Diese Art der Kühlung ist einerseits sehr aufwendig, andererseits bei Motoren aufgrund deren niedrigeren Temperatur nicht einsetzbar. Zur Steigerung der Kühlwirkung ist somit eine Erhöhung des Wärmeflusses über im Wesentlichen gleichbleibend groß dimensionierte wärmeabgebende Oberflächen erforderlich.

Der Erfindung liegt daher die Aufgabe zugrunde, ein Kühlverfahren für elektrische Schienenfahrzeugkomponenten anzugeben, welches eine besonders hohe Kühlwirkung aufweist.

Die Aufgabe wird durch eine Kühlanordnung mit den Merkmalen des Anspruchs 1 sowie eines Schienenfahrzeugs gemäß Anspruch 7 gelöst. Vorteilhafte Ausgestaltungen sind Gegenstand untergeordneter Ansprüche.

Dem Grundgedanken der Erfindung nach erfährt ein flüssiges Kühlmittel an einer zu kühlenden Oberfläche einen Phasenübergang von dem flüssigen Zustand in den gasförmigen Zustand und wird in diesem gasförmigen Zustand an die Umgebung des Schienenfahrzeugs abgeführt. Die für diesen Phasenübergang (Verdunstung) erforderliche Wärmezufuhr erfolgt durch die Verlustwärme der zu kühlenden elektrischen Schienenfahrzeugkomponenten. Dabei wird das flüssige Kühlmittel nach dem Phasenübergang in die gasförmige Phase nicht mehr rückgewonnen, sondern es entweicht in die Umgebung des Schienenfahrzeugs. Dadurch entfallen die bei gebräuchlichen Flüssigkeitskühlungen erforderlichen Einrichtungen wie Kühlmittelleitungen, Pumpen, Rückkühler u.ä. Im Gegensatz zu der bei der Kühlung von Halbleitern gemäß dem Stand der Technik eingesetzten Siedebadkühlung erfolgt keine Rückgewinnung des Kühlmittels, wodurch es erforderlich ist, ein umweltverträgliches Kühlmittel einzusetzen. Dabei ist Wasser als Kühlmittel besonders vorteilhaft, da es einfach an die Umwelt abgegeben werden kann.

Mit gegenständlicher Erfindung können elektrische Schienenfahrzeugkomponenten sehr effektiv gekühlt werden, da der Wärmefluß durch eine Oberfläche sehr stark gesteigert werden kann, wenn an einer Seite dieser Oberfläche ein Phasenübergangsprozeß (Verdunstung) einer Flüssigkeit stattfindet. Diese Art der Kühlung eignet sich insbesondere für elektrische Anlagen in Schienenfahrzeugen, da in solchen Anwendungen der für eine Kühleinrichtung zur Verfügung stehende Bauraum limitiert ist und somit große wärmeabgebende Oberflächen (beispielsweise Kühlrippen) meist nicht eingesetzt werden können. Beispielsweise ist es bei Fahrmotoren praktisch nicht möglich, eine ausreichende Kühlfläche mittels Kühlrippen zu erzeugen, sodass gemäß dem Stand der Technik Kreislauf-Wasserkühlungen oder Gebläsekühlungen eingesetzt werden müssen. Der Einsatz des Phasenübergangs zur Kühlung ermöglicht einen wesentlich größeren Wärmetransport bzw. Wärmeabfuhr bei gleichzeitig niedriger Temperaturdifferenz zwischen der zu kühlenden Oberfläche und der Umgebungsluft als es bei herkömmlichen Konvektionskühlungen möglich ist. Auch Konvektionskühlungen mit forcierter Luftbewegung erzielen keinen mit dem erfindungsgemäßen Verfahren möglichen Wärmefluß.

Die Aufbringung des flüssigen Kühlmittels auf die zu kühlende Oberfläche ist so vorzunehmen, dass eine möglichst gleichmäßige Benetzung der Oberfläche erfolgt und solcherart zu dosieren, dass die Zuführungsrate des aufgebrachten Kühlmittels im Wesentlichen der Verdunstungsrate des an der Oberfläche verdunstenden Kühlmittels entspricht. Die Gestaltung dieser Oberfläche ist gemäß den Gegebenheiten eines konkreten Schienenfahrzeugs und der Art der zu kühlenden Komponente zu gestalten. Es ist vorteilhaft, die Verdunstung mittels forcierter Luftbewegung zu unterstützen, wobei sowohl der Fahrtwind als auch entsprechende Gebläse eingesetzt werden können.

In weiterer Fortbildung der Erfindung empfiehlt es sich die Zuführungsrate des Kühlmittels dem momentanen Kühlungsbedarf der elektrischen Komponente entsprechend zu gestalten. Dabei wird vorteilhafterweise eine Steuer- bzw. Regeleinrichtung vorgesehen, welche bestimmte Fahrzeugparameter (z.B. Fahrstrom, Komponententemperatur, Außentemperatur, etc.) ermittelt und auf Basis dieser Parameter die erforderliche Zuführungsrate des Kühlmittels bestimmt und das Kühlmittel entsprechend dosiert. Dadurch ist der Vorteil erzielbar, auch Komponenten mit sehr kurzen thermischen Zeitkonstanten (Leistungshalbleiter) sehr effektiv kühlen zu können wobei die Kühlung sehr schnell auf Lastwechsel reagiert. Insbesondere kann dadurch das Kühlmittel sehr effizient eingesetzt werden, da nur bei Bedarf ein Kühlmittelfluß erzeugt wird. Der Kühlmittelfluß kann stufenlos gesteuert werden oder in bestimmten Kühlmittelflußstufen erfolgen. Solcherart ist ein sparsamer Verbrauch des Kühlmittels gewährleistet.

Ein wesentlicher Vorteil gegenständlicher Erfindung ist es, dass als flüssiges Kühlmittel Wasser eingesetzt werden kann. Dieses Kühlwasser kann einerseits fahrzeugseitig mitgeführt werden, wozu ein entsprechender Behälter und eine Zuführungsvorrichtung (Tankanschluß) erforderlich ist, andererseits empfiehlt es sich besonders das Wasser an Bord des Schienenfahrzeugs zu gewinnen. Dazu wird das beim Betrieb einer Klimaanlage anfallende Kondensat aufgefangen und einem Behälter zugeführt und in weiterer Folge als Kühlmittel eingesetzt. Dieses Kondensat besteht im Wesentlichen aus Wasser und kann ohne weitere Aufbereitung als Kühlmittel eingesetzt werden.
Dabei ist es besonders vorteilhaft, dass Schienenfahrzeuge welche in warmen Umgebungsbedingungen eingesetzt werden einerseits einen höheren Anfall an Klimaanlagenkondensat aufweisen, andererseits auch einen erhöhten Kühlungsbedarf der elektrischen Komponenten aufweisen.

Das erfindungsgemäße Verfahren eignet sich besonders vorteilhaft für Nahverkehrsfahrzeuge, insbesondere U-Bahnen. In Folge der bei U-Bahnen gebräuchlichen Bauweise mit zu einem Zugverband verbundenen, einzeln nicht einsetzbaren Wagen und über den gesamten Zug verteilten Antrieben und mehreren dezentralen Klimaanlagen kann das erfindungsgemäße Kühlverfahren besonders vorteilhaft eingesetzt werden.
Bei konventionellen Schienenfahrzeugen mit einem aus einer Lokomotive und mehreren Waggons bestehenden Zugverbund ist hingegen die Leitung des Kondensats zu dem in der Lokomotive konzentrierten Antriebskomponenten sicherzustellen.

Neben der Gewinnung des flüssigen Kühlmittels (Wasser) aus dem Kondensat einer Klimaanlage kann dieses Wasser auch beispielsweise durch Sammlung natürlicher Niederschläge (z.B. Regen) gewonnen werden. Ebenso ist es vorteilhaft, den sich am Schienenfahrzeug niederschlagenden Tau zu sammeln und als flüssiges Kühlmittel einzusetzen.
Dabei ist es besonders vorteilhaft alle Versorgungsmöglichkeiten mit flüssigem Kühlmittel (Sammlung von Niederschlägen, Kondensat aus Klimaanlage und externe Betankung) gleichzeitig in einem Schienenfahrzeug vorzusehen. Dadurch kann in wechselnden Umgebungsbedingungen jeweils die optimale Kühlmittelquelle herangezogen werden um auch beispielsweise bei Fahrten mit ausgeschalteter Klimaanlage bei Regen eine optimale Kühlung der elektrischen Komponenten sicherzustellen.

Der wesentliche Vorteil gegenständlicher Erfindung ist, dass die Kühlung (Kühlkörper, Ventilatoren, etc.) elektrischer Schienenfahrzeugkomponenten auf geringere Belastungen als Spitzenlast ausgelegt werden kann, da mittels der erfindungsgemäßen Kühlverfahrens diese Spitzenlastfälle abgedeckt werden.

Die Erfindung sieht vor, die Phasenübergangsrate des flüssigen Kühlmittels in den gasförmigen Zustand durch den Einsatz von Alumosilikat zu steigern. Alumosilikate weisen eine im Verhältnis zur Masse sehr große innere Oberfläche auf und können somit sehr große Mengen an Wasser adsorbieren.
Es ist besonders vorteilhaft das Alumosilikat Zeolith zu verwenden, da Zeolith diese vorteilhaften Eigenschaften in besonders hohem Ausmaß aufweist.
Diese Ausführungsform eignet sich insbesondere für einen diskontinuierlichen Betrieb, in welchen in bestimmten Zeiträumen die wärmeabgebende Oberfläche mit flüssigem Kühlmittel benetzt wird welches durch die Adsorption im Zeolith verstärkt verdampft und in darauffolgenden Zeiträumen das Alumosilikat regeneriert, d.h. das in den Poren adsorbierte Kühlmittel aus dem Alumosilikat ausgetrieben wird. Diese Betriebsart eignet sich insbesondere für die bei Nahverkehrsschienenfahrzeugen (U-Bahnen) auftretenden Belastungen, bei welchen sich in rascher Folge Zeiträume hoher Belastung (Beschleunigen) mit belastungsfreien Zeiträumen (Halt in Station) abwechseln. Mit gegenständlicher Erfindung können die Kühleinrichtungen (Kühlkörper, Ventilatoren, etc.) wesentlich kleiner und damit leichter ausgeführt werden, trotzdem kann der gesamte Wärmefluß bei hoher Belastung (insbesondere der Stromrichter) abgeführt werden.

Es zeigen beispielhaft:
**Fig.1** ein Kühlsystem für elektrische Schienenfahrzeugkomponenten.
**Fig.2** ein Kühlsystem für elektrische Schienenfahrzeugkomponenten mit Adsorptionsunterstützung.

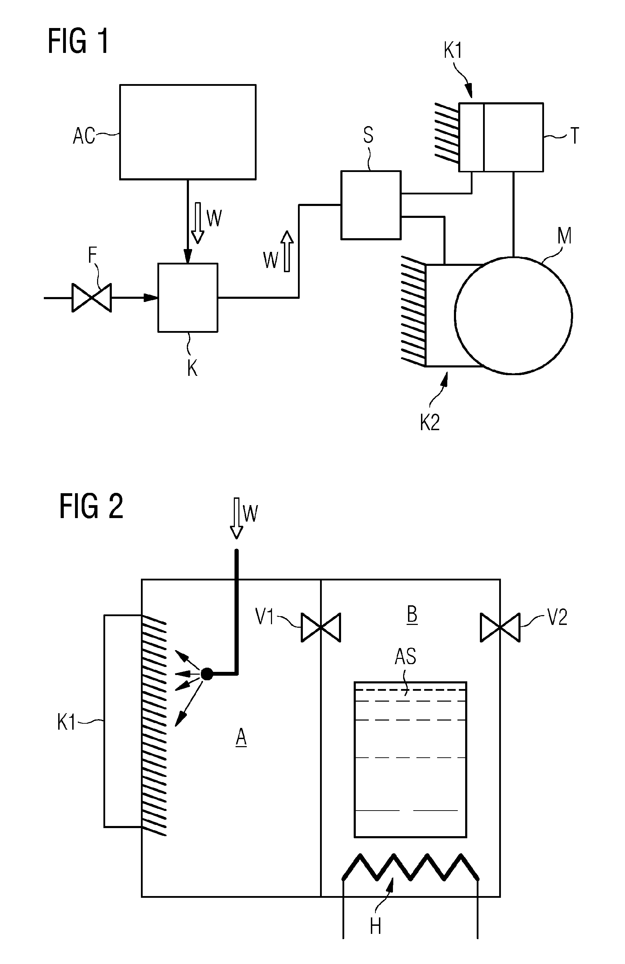

**Fig.1** zeigt beispielhaft und schematisch ein Kühlsystem für elektrische Schienenfahrzeugkomponenten. Es sind ein Stromrichter T und ein zugehöriger Fahrmotor M dargestellt. Dem Stromrichter T ist eine Stromrichter-Kühleinrichtung K1 zugeordnet, dem Fahrmotor M ist eine Fahrmotor-Kühleinrichtung K2 zugeordnet. Diese Kühleinrichtungen K1, K2 sind so ausgebildet, dass sie die Verlustwärme der ihnen jeweils zugeordneten elektrischen Schienenfahrzeugkomponenten aufzunehmen imstande sind und weisen eine diese Verlustwärme an die Umgebungsluft abgebenden Oberfläche auf. Weiters sind diese Kühleinrichtungen K1, K2 mit Zuführ- und Aufbringungseinrichtungen für ein flüssiges Kühlmittel W ausgestattet. Die Aufbringungseinrichtungen (in Fig.1 nicht dargestellt) verteilen das flüssige Kühlmittel W auf der die Verlustwärme an die Umgebungsluft abgebende Oberfläche.
Die Aufbringungsrate der flüssigen Kühlmittels W wird mittels einer Steuereinrichtung S in Abhängigkeit bestimmter Parameter des Schienenfahrzeugs, bzw. der Antriebskomponenten gesteuert.
Eine Klimaanlage AC, deren Kondensat aufgefangen und als flüssiges Kühlmittel W eingesetzt wird ist vorgesehen. Weiters ist ein Kondensattank K vorgesehen, in welchem dieses Kondensat gesammelt wird. Dieser Kondensattank K ist mittels einer Füllvorrichtung F mit flüssigem Kühlmittel W befüllbar. Diese Füllvorrichtung F dient insbesondere dazu, auch Fahrten mit ausgeschalteter Klimaanlage AC bei gleichbleibend hoher Kühlwirkung für die elektrischen Komponenten M, T durchführen zu können.

**Fig.2** zeigt beispielhaft und schematisch ein Kühlsystem für elektrische Schienenfahrzeugkomponenten mit Adsorptionsunterstützung. Es ist am Beispiel einer Stromrichter-Kühleinrichtung K1 das Prinzip der Adsorptionsunterstützung dargestellt. Die wärmeabgebende Oberfläche der Stromrichter-Kühleinrichtung K1 ist in einer Kühlkörperkammer A angeordnet. Im normalen Betrieb ohne besondere Kühlungsanforderungen ist diese Kühlkörperkammer A durchlüftet. Diese Durchlüftung kann mittels in Fig.2 nicht dargestellter Klappen unterbunden werden, sodass diese wärmeabgebende Oberfläche der Stromrichter-Kühleinrichtung K1 in der Kühlkörperkammer A eingeschlossen ist. In diesem absorptionsunterstützten Betriebszustand ist das erste Ventil V1 geöffnet, die Kühlkörperkammer A ist somit mit der Adsorptionskammer B luftdurchlässig verbunden. In der Adsorptionskammer B ist ein Alumosilikat AS so angeordnet, dass es Feuchtigkeit aus Luft der Adsorptionskammer B aufnehmen kann. Das zweite Ventil V2 ist in diesem Betriebszustand geschlossen. Flüssiges Kühlmittel W, im Allgemeinen Wasser, wird auf die wärmeabgebende Oberfläche der Stromrichter-Kühleinrichtung K1 aufgebracht und erfährt an dieser Oberfläche einen Phasenübergang von der flüssig- in die Gasphase und nimmt dabei sehr große Wärmemengen von der Stromrichter-Kühleinrichtung K1 auf. Diese Gasphase des flüssigen Kühlmittels W wird von dem Alumosilikat AS in der Adsorptionskammer B aufgenommen, sodass keine Sättigung der in den Kammern A, B enthaltenen Luft auftritt. Am Ende der adsorptionsunterstützten Kühlphase wird das erste Ventil V1 geschlossen und die Belüftung der Kühlkörperkammer A wiederhergestellt. Gleichzeitig wird das zweite Ventil V2 geöffnet, dieses stellt eine luftdurchlässige Verbindung der Adsorptionskammer B mit der Umgebungsluft her. Zur raschen Entfernung des in dem Alumosilikat AS aufgenommenen flüssigen Kühlmittels W ist eine Heizung H vorgesehen, welche das Alumosilikat AS erhitzen kann, wodurch das flüssige Kühlmittel W aus dem Alumosilikat AS freigesetzt wird und über das zweite Ventil V2 an die Umgebungsluft abgegeben wird. Die zum Betrieb dieser Heizung H erforderliche Energie, im Allgemeinen elektrische Energie, wird bevorzugterweise in lastarmen Betriebszuständen (Stillstand, Bremsung) aufgebracht, sodass ein alternierender Ablauf von Kühlungs- und Regenerationsphasen ausgeführt werden kann, wie es beispielsweise für Nahverkehrsfahrzeuge vorteilhaft ist.

### Liste der Bezeichnungen

- AC: Klimaanlage
- K: Kondensattank
- F: Füllvorrichtung
- S: Steuereinrichtung
- T: Stromrichter
- M: Fahrmotor
- K1: Stromrichter-Kühleinrichtung
- K2: Fahrmotor-Kühleinrichtung
- W: flüssiges Kühlmittel
- AS: Alumosilikat
- V1: erstes Ventil
- V2: zweites Ventil
- A: Kühlkörperkammer
- B: Adsorptionskammer
- H: Heizung

## Patentansprüche

1. Kühlanordnung für eine elektrische Schienenfahrzeugkomponente (T, M), wobei Wasser als ein flüssiges Kühlmittel an einer zu kühlenden Oberfläche einer Kühleinrichtung (K1) der Schienenfahrzeugkomponente (T, M) einen Phasenübergang von dem flüssigen Zustand in den gasförmigen Zustand erfährt und in diesem gasförmigen Zustand an die Umgebung des Schienenfahrzeugs abgeführt wird,
**dadurch gekennzeichnet, dass** die zu kühlende Oberfläche der Kühleinrichtung (K1) in einer Kühlkörperkammer (A) angeordnet ist, die über ein Ventil (V1) mit einer Adsorptionskammer (B) verbunden ist, wobei die Verdunstung an der zu kühlenden Oberfläche durch Adsorption des Wassers in Alumosilikaten, die in der Adsorptionskammer (B) vorgesehen sind, verstärkt ist.

2. Kühlanordnung gemäß Anspruch 1,
**dadurch gekennzeichnet, dass** die zu kühlende Schienenfahrzeugkomponente ein Fahrmotor (M) ist.

3. Kühlanordnung gemäß Anspruch 1,
**dadurch gekennzeichnet, dass** die zu kühlende Schienenfahrzeugkomponente ein Stromrichter (T) ist.

4. Kühlanordnung gemäß einem der Ansprüche 1 bis 3,
**dadurch gekennzeichnet, dass** das Wasser an Bord des Schienenfahrzeugs gewonnen ist.

5. Kühlanordnung gemäß Anspruch 4,
**dadurch gekennzeichnet, dass** das Wasser durch Kondensation der Luftfeuchtigkeit mittels einer Klimaanlage (AC) gewonnen wird.

6. Kühlanordnung nach einem der Ansprüche 1 bis 5,
**dadurch gekennzeichnet, dass** das als Alumosilikat ein Zeolith verwendet wird.

7. Schienenfahrzeug, umfassend eine elektrische Schienenfahrzeugkomponente (T, M),
**dadurch gekennzeichnet, dass** zur Kühlung der elektrischen Schienenfahrzeugkomponente (T, M) eine Kühlanordnung nach einem der vorgehenden Ansprüche vorgesehen ist.

## Claims

1. Cooling arrangement for an electrical railway vehicle component (T, M), wherein water, as a liquid coolant, undergoes, at a surface to be cooled of a cooling device (K1) of the railway vehicle component (T, M), a phase transition from the liquid state to the gaseous state and in this gaseous state is discharged to the surroundings of the railway vehicle,
**characterized in that** the surface to be cooled of the cooling device (K1) is arranged in a cooling body chamber (A) which is connected via a valve (V1) to an adsorption chamber (B), wherein evaporation at the surface to be cooled is reinforced by adsorption of the water in aluminosilicates which are provided in the adsorption chamber (B).

2. Cooling arrangement according to Claim 1,
**characterized in that** the railway vehicle component to be cooled is a drive motor (M).

3. Cooling arrangement according to Claim 1,
**characterized in that** the railway vehicle component to be cooled is a power converter (T).

4. Cooling arrangement according to one of Claims 1 to 3,
**characterized in that** the water is obtained on-board the railway vehicle.

5. Cooling arrangement according to Claim 4,
**characterized in that** the water is obtained by condensation of atmospheric humidity by means of an air conditioning unit (AC).

6. Cooling arrangement according to one of Claims 1 to 5,
**characterized in that** the aluminosilicate used is a zeolite.

7. Railway vehicle, comprising an electrical railway vehicle component (T, M),
**characterized in that** for cooling the electrical railway vehicle component (T, M), there is provided a cooling arrangement according to one of the preceding claims.

## Revendications

1. Agencement de refroidissement d'un élément ( T, M ) de véhicule ferroviaire électrique, dans lequel de l'eau subit, en tant qu'agent de refroidissement liquide, un changement de phase de l'état liquide à l'état gazeux sur une surface à refroidir d'un dispositif ( K1 ) de refroidissement de l'élément ( T, M ) de véhicule ferroviaire, et est évacuée en cet état gazeux à l'atmosphère autour du véhicule ferroviaire,
**caractérisé en ce que** la surface à refroidir du dispositif ( K1 ) de refroidissement est disposée dans une chambre ( A ) à refroidisseur, qui communique par l'intermédiaire d'un robinet ( V1 ) avec une chambre ( B ) d'adsorption, l'évaporation sur la surface à refroidir étant renforcée par une adsorption de l'eau dans des aluminosilicates, qui sont prévus dans la chambre ( B ) d'adsorption.

2. Agencement de refroidissement suivant la revendication 1,
**caractérisé en ce que** l'élément de véhicule ferroviaire à refroidir est un moteur de traction.

3. Agencement de refroidissement suivant la revendication 1,
**caractérisé en ce que** l'élément de véhicule ferroviaire à refroidir est un redresseur ( T ).

4. Agencement de refroidissement suivant l'une des revendications 1 à 3,
**caractérisé en ce que** l'eau est obtenue à bord du véhicule ferroviaire.

5. Agencement de refroidissement suivant la revendication 4,
**caractérisé en ce que** l'eau est obtenue par condensation de l'humidité de l'air au moyen d'une installation ( AC ) de conditionnement d'air.

6. Agencement de refroidissement suivant l'une des revendication 1 à 5,
**caractérisé en ce qu'**il est utilisé un zéolithe comme aluminosilicate.

7. Véhicule ferroviaire, comprenant un élément ( T, M ) de véhicule ferroviaire électrique,
**caractérisé en ce qu'**il est prévu, pour le refroidissement de l'élément ( T, M ) de véhicule ferroviaire électrique, un agencement de refroidissement suivant l'une des revendications précédentes.
